**Europäisches Patentamt**

**European Patent Office**

**Office européen des brevets**

(11) Veröffentlichungsnummer: **0 007 558**

**A1**

(12) # EUROPÄISCHE PATENTANMELDUNG

(21) Anmeldenummer: **79102493.8**

(22) Anmeldetag: **17.07.79**

(51) Int. Cl.³: **B 29 C 27/08**
       **B 23 K 20/10**

(30) Priorität: **31.07.78 DE 2833577**

(43) Veröffentlichungstag der Anmeldung:
       **06.02.80 Patentblatt 80/3**

(84) Benannte Vertragsstaaten:
       **AT BE CH DE FR GB IT LU NL SE**

(71) Anmelder: **Maschinenfabrik Rissen GmbH**
       **Lehmkuhlenweg 111**
       **D-2000 Hamburg 56(DE)**

(84) Benannte Vertragsstaaten:
       **DE**

(71) Anmelder: **4P Nicolaus Kempten GmbH**
       **Ulmer Strasse 18**
       **D-8960 Kempten(DE)**

(72) Erfinder: **Schmidt, Werner**
       **Hufner Strasse 7**
       **D-2000 Hamburg 76(DE)**

(74) Vertreter: **Hutzelmann, Gerhard**
       **Kronenstrasse 16**
       **D-8960 Kempten(DE)**

(54) Verfahren zum Ultraschallschweissen und Vorrichtung zur Durchführung des Verfahrens.

(57) Verfahren und Vorrichtung zum Ultraschallschweissen von schichtförmigem Material wie beispielsweise mit schweissbarem Kunststoff beschichtetem Papier oder Karton. Die miteinander zu verschweissenden Materialien werden zwischen einer Sonotrode (2) als Ultraschallgeber und einem Amboss (1) als Gegenlager eingespannt. Die Ultraschallwellen wirken dabei in einem Winkel (Alpha) zur Senkrechten auf das Material. Durch dieses Schrägstellen der Ultraschallquelle wird zusätzlich zum Verschweissen der Materialschichten deren Transport durch die Schweisseinrichtung erreicht.

Der Amboss (1) kann als Rolle mit oder ohne Antrieb ausgestaltet sein.

FIG 1

EP 0 007 558 A1

Croydon Printing Company Ltd

## Verfahren zum Ultraschallschweißen und Vorrichtung zur Durchführung des Verfahrens

Die Erfindung bezieht sich auf ein Verfahren zum Ultraschallschweißen von schichtförmigem Material wie beispielsweise mit schweißbarem Kunststoff beschichtetem Papier oder Karton sowie auf eine Vorrichtung zur Durchführung des Verfahrens.

Es ist bekannt, zwei flach aufeinanderliegende Schichten aus verschweißbarem Material im Stillstand durch Beaufschlagung mit Ultraschall senkrecht zur Schichtebene zu verschweißen. Die Anpreßkraft der Sonotrode, die jenseits der zu verschweißenden Schichten vom Amboß aufgenommen wird, ist im allgemeinen sehr hoch, beispielsweise über 1000 N, so daß die zu verschweißenden Schichten durch die Sonotrode örtlich festgelegt werden. Zwar kann man die Sonotrodenschwingungen so einstellen, daß die Anpreßkraft auf die zu verschweißenden Schichten kurzzeitig bei den hebenden Amplitudenspitzen der Sonotrode Null wird, so daß theoretisch die Möglichkeit besteht, die Schichten während dieser kurzen Zeitspanne zu verschieben und - in der Aufeinanderfolge solcher Zeitspannen - zu fördern. Jedoch ist praktisch eine kontinuierliche Förderung des Materials während des Schweißvorganges nicht möglich.

Der Erfindung liegt die Aufgabe zugrunde, ein Verfahren und eine Vorrichtung zu schaffen, die eine Förderung des Materials während des Schweißvorganges bewirkt.

Die erfindungsgemäße Lösung besteht in den kennzeichnenden Merkmalen des Anspruchs 1.

Eine erfindungsgemäße Vorrichtung zur Durchführung des Verfahrens ist in Anspruch 2 gekennzeichnet.

Die Schwingung der Sonotrode hat infolge der Neigung eine Kraft-Komponente in Schichtrichtung , die das beaufschlagte Material zu einer Bewegung veranlaßt und die daher zur Förderung des Materials genutzt werden kann. Dieser Effekt ergibt sich auch bei einem stationären Amboß. Gemäß einer vorteilhaften Ausgestaltung der Erfindung ist jedoch ein rollenförmiger oder ein in anderer Weise dem Bewegungseinfluß nachgebender Amboß vorgesehen. Erfindungsgemäß kann der Amboß auch angetrieben ausgebildet sein, wodurch die Förderwirkung des Ultraschalls noch unterstützt wird. Vorzugsweise ist die Neigung der Sonotrode zur Bestimmung der gewünschten Fördergeschwindigkeit veränderbar. Damit auch die Förderrichtung vorbestimmt werden kann, kann neben der für das Material vorgesehenen Bewegungsbahn eine Leitschiene vorgesehen sein, zu der hin die Sonotrode bzw. der Umfang des rollenförmig ausgeführten Ambosses geneigt ist, so daß die Kante der zu verschweißenden Schicht ständig durch die Vorschubbewegung gegen die Kante gedrückt und dadurch ausgerichtet wird.

Die Erfindung wird im folgenden näher unter Bezugnahme auf die Zeichnung erläutert, die in

Fig. 1 und 2        eine Seitenansicht und Draufsicht einer ersten Ausführungsform und in

Fig. 3 und 4        eine Seitenansicht und Draufsicht einer zweiten Ausführung schematisch veranschaulicht.

Oberhalb eines als Rolle 1 ausgeführten Ambosses befindet sich eine Sonotrode 2, die gegenüber der Ebene des zu verschweißenden Materials 4 in einem Winkel $\alpha$ geneigt ist. Bei dem zu verschweißenden Material handelt es sich beispielsweise um schweißfähiges Plastikmaterial oder um entsprechend beschichtete Papierzuschnitte oder dergleichen. Das Material kann bahnförmig sein oder aus einzelnen Zuschnitten bestehen. Im vorliegenden Fall sei angenommen, daß es sich um einzelne Zuschnitte handelt, die durch eine Fördernase 3 vorwärts befördert werden, die an einer Kette 5 in Pfeilrichtung A bewegt wird. Dabei wird die Neigung $\alpha$ der Sonotrode 2 zweckmäßigerweise so eingestellt, daß die durch die Sonotrode bewirkte Fördergeschwindigkeit größer ist als die der Fördernase 3. Wenn endloses Material bearbeitet wird, werden die Vorschubgeschwindigkeit der Sonotrode und die der übrigen Vorschubmittel entsprechend ausreichend genau aufeinander abgestimmt oder die sonstigen Vorschubmittel werden nachgiebig gestaltet, so daß die Vorschubgeschwindigkeit von der Sonotrode bestimmt werden kann.

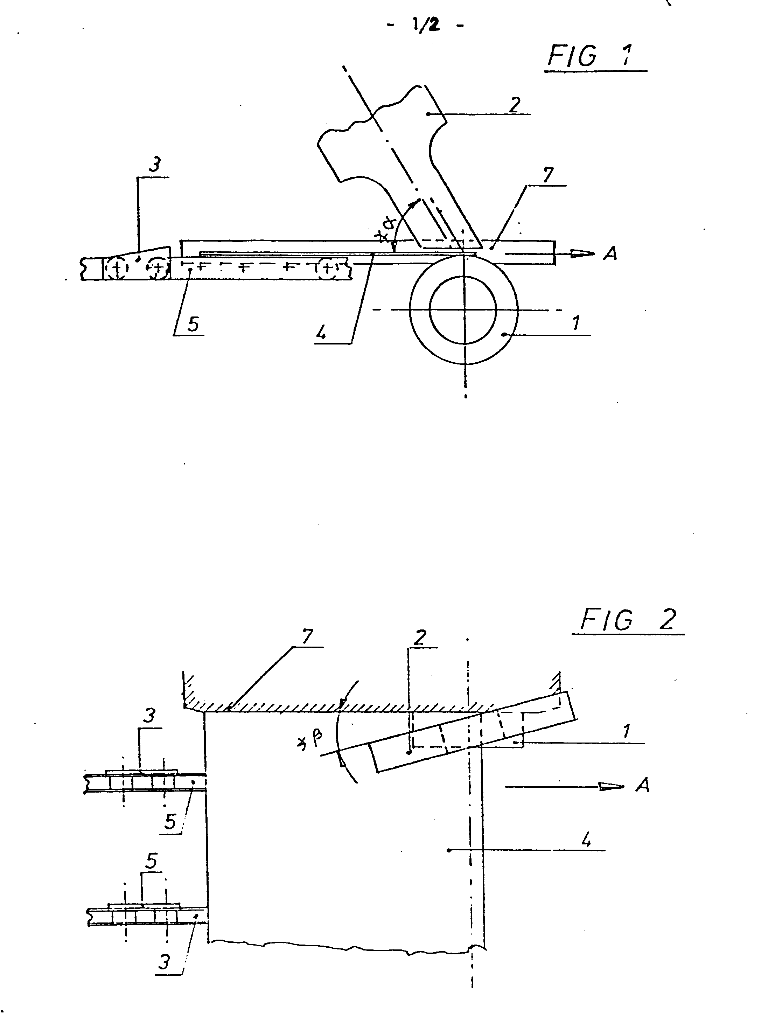

Aus Fig. 2 ersieht man, daß der von einem Paar von Fördernasen 3 an einem Paar von Ketten 5 geförderte Zuschnitt 4 mit einer Kante an einer Leitschiene 7 anliegt, die parallel zur Vorschubrichtung A verläuft. Die Sonotrode 2 ist in der Draufsicht ein wenig zu der Leitschiene 7 um den spitzen Winkel $\beta$ geneigt, so daß sie auf den Zuschnitt 4 eine zur Leitschiene gerichtete Vorschubkomponente ausübt, die dafür sorgt, daß der Zuschnitt stets an der Leitschiene anliegt und dadurch eine korrekte Lage behält. Die Amboßrolle 1 hat eine parallel zur Vorschubrichtung A gelegene Umfangsrichtung. Jedoch könnte auch vorgesehen sein, daß statt oder zusätzlich zur Sonotrode 2 die Umfangsrichtung der Rolle 1 zu der Leitschiene 7 hin geneigt ist.

Besonders vorteilhaft ist diese Einrichtung geeignet für doppelseitig mit Polyäthylen beschichtete Faltschachtelzuschnitte oder zum Umschweißen einer Zuschnittkante mit einem schmalen Polyäthylenstreifen.

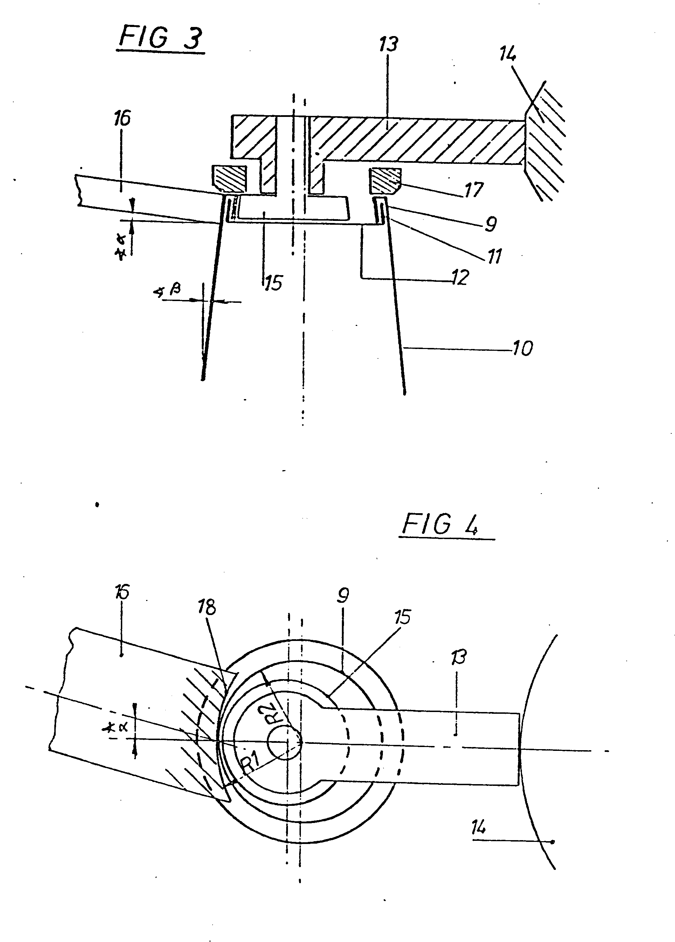

Die Figuren 3 und 4 zeigen die Anwendung des Prinzips zum Verschweißen des unteren Randes 9 des Mantels 10 eines Papierbechers mit dem Rand 11 eines eingesetzten Bodens 12.

An einer Halterung 13, die ihrerseits von einem Maschinenteil 14 abgestützt wird, ist eine Amboßrolle 15 gelagert, die in den Hohlboden des Bechers eingreift. Mit der Umfangsfläche der Amboßrolle 15 wirkt von außen, jenseits des Becherrandes eine Sonotrode 16 zusammen.

Wie man aus Fig. 4 sieht, ist die Sonotrode um den Winkel $\alpha$ gegenüber dem Radius der Amboßrolle 15 geneigt. Aus dieser Neigung ergibt sich auf den Becher eine drehende Vorschubbewegung.

Außerdem sieht man aus Fig. 3 daß die Sonotrode 16 außerdem um einen Winkel $\gamma$ gegenüber der Mittelachse des Bechers und der Amboßrolle 15 geneigt ist. Dadurch wird der Konizität des Bechers Rechnung getragen. Der Winkel $\gamma$ wird so gewählt, daß der Becherrand einen (bezogen auf die Umfangsrichtung) solchen Seitenschub erhält, daß er sich an einem Anschlagring 17 zwecks korrekter Positionierung anlegt.

Die Sonotrode 16 hat eine konkav geformte Stimfläche 18 mit einem Krümmungsradius R1, der ebenso groß ist wie oder wenig größer als der Krümmungsradius R2 der Außenfläche des zu verschweißenden Becherrandes. Dadurch wird eine breite Zone des Becherrandes in die Ultraschallschwingungen einbezogen.

5 Die Anpressung zwischen Sonotrode und Amboßrolle kann einerseits durch Bewegung der Sonotrode, andererseits aber auch durch Bewegung der Halterung 13 gegen die Sonotrode bewirkt werden, wobei im letzteren Fall das Maschinenteil 14 als Bewegungs- und Anpreßnocken ausgeführt ist.

- 5 -

Patentansprüche

1. Verfahren zum Ultraschallschweißen von schichtförmigem Material, wie beispielsweise mit schweißbarem Kunststoff beschichtetem Papier oder Karton, dadurch gekennzeichnet, daß die Schwingungsrichtung gegenüber der Schicht-Normalen geneigt ist, wodurch das Material während des Schweißens entsprechend der Neigungsrichtung gefördert wird.

2. Vorrichtung zum Ultraschallschweißen von schichtförmigem Material wie beispielsweise mit schweißbarem Kunststoff beschichtetem Papier oder Karton, mit einer Sonotrode und einem dieser gegenüberliegend angeordneten Amboß sowie Einrichtungen zum Führen des zu verschweißenden Materials zwischen Sonotrode und Amboß, die auch die Materialrichtung festlegen, zur Durchführung des Verfahrens nach Anspruch 1, dadurch gekennzeichnet, daß die Schwingungsrichtung der Sonotrode (2) geneigt gegenüber der Materialrichtung angeordnet ist und daß der Amboß (1) und/oder die Einrichtungen (3,5) zum Führen des Materials für eine während des Verschweißens fortdauernde Materialbewegung ausgeführt sind.

3. Vorrichtung nach Anspruch 2, dadurch gekennzeichnet, daß der Amboß (1) als Rolle ausgeführt ist.

4. Vorrichtung nach Anspruch 2 oder 3, dadurch gekennzeichnet, daß der Amboß (1) mit einer Antriebseinrichtung versehen ist.

5. Vorrichtung nach einem der Ansprüche 2, 3 oder 4, dadurch gekennzeichnet, daß die Einrichtungen zum Führen des Materials eine seitlich angeordnete Leitschiene (7) umfassen, und daß die Schwingungsrichtung der Sonotrode (2) und /oder die Umfangsrichtung des als Rolle ausgebildeten Ambosses (1) in spitzem Winkel zu der Leitschiene hin geneigt ist.

6. Vorrichtung nach einem der Ansprüche 2 bis 5, dadurch gekennzeichnet, daß die Neigungsrichtung der Sonotrode veränderbar ist.

12.07.79/Hu-gr

0007558

FIG 1

FIG 2

0007558

## FIG 3

## FIG 4

| | Europäisches Patentamt | **EUROPÄISCHER RECHERCHENBERICHT** | Nummer der Anmeldung |
| | | | EP 79 10 2493 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | DE - B - 1 287 420 (PHILIPS GLOEILAMPENFABRIEKEN) <br><br> * Spalte 1, Zeilen 17-24; und 46-51; Spalte 4, Zeilen 29-33; Patentanspruch * <br> -- | 1-3 <br><br><br> * | B 29 C 27/08 <br> B 23 K 20/10 |
| X | US - A - 3 852 144 (BRANSON) <br><br> * Spalte 3, Zeilen 12-34; Figur 3 * <br><br> -- | 1-4 | |
| | DE - A - 1 479 511 (NIRONA) <br><br> * Figur 1 * <br><br> -- | 1 | RECHERCHIERTE SACHGEBIETE (Int. Cl. 3) <br><br> B 29 C <br> B 23 K |
| | DE - A - 1 427 329 (LEHFELDT) <br> * Figur 3; Spalte 3, Absatz 3 * <br><br> -- | 1 | |
| A | FR - A - 1 298 433 (HELICOTUBE) | | |
| A | US - A - 3 101 404 (HILL) | | |
| A | US - A - 3 438 824 (BALAMUTH) | | |
| A | DE - A - 1 935 572 (EASTMANN KODAK) <br><br> ---- | | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Grunden angeführtes Dokument <br> &: Mitglied der gleichen Patent-familie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 05-11-1979 | CORDENIER |

EPA form 1503.1   06.78